# EUROPÄISCHE PATENTANMELDUNG

(11) **EP 1 152 558 A2**
(43) Veröffentlichungstag der Anmeldung: **07.11.2001**
(21) Anmeldenummer: 01108030.6
(22) Anmeldetag: 29.03.2001
(51) Int. Cl.: H04B 17/00

(54) **Empfängeranordnung zum Empfangen frequenzmodulierter Funksignale sowie Verfahren zum Anpassen und Testen eines Empfangszweiges der Empfängeranordnung**

(30) Priorität: 11.04.2000 DE 10018021
(71) Anmelder: NOKIA MOBILE PHONES LTD., 02150 Espoo (FI)
(72) Erfinder: Schetelig, Markus, 45731 Waltrop (DE); Burgess, Paul, 44787 Bochum (DE); Kefenbaum, Arno, 45527 Hattingen (DE)
(74) Vertreter: TER MEER STEINMEISTER & PARTNER GbR

(57) **Zusammenfassung**

Die Erfindung betrifft eine Empfängeranordnung zum Empfang frequenzmodulierter Funksignale, mit einer Demodulatorschaltung (18), die ein Zwischenfrequenzsignal in ein Spannungssignal umsetzt, das an eine Eingangsstufe (22) einer Signalverarbeitungsschaltung (23) angelegt wird, und mit einem Taktsignaloszillator (26), der ein Taktsignal zur Erzeugung eines Frequenzsignals für die Herabsetzung der Frequenz eines Empfangssignals auf die Zwischenfrequenz liefert, sowie ein Verfahren zum Anpassen eines Empfangszweiges der Empfängeranordnung an eine Eingangsstufe (22) einer Signalverarbeitungsschaltung (23) und ein Selbsttestverfahren. Um die Anpassung der Demodulatorschaltung an die nachfolgende Eingangsstufe einer Signalverarbeitungsschaltung ohne externe Testsignale durchführen zu können, sind eine Testsignalgeneratorstufe (28), die aus einem vom Taktsignaloszillator (26) gelieferten Taktsignal ein Testsignal mit bekannter Frequenz gebildet und deren Eingang mit einem das Taktsignal liefernden Ausgang des Taktsignaloszillators (26) verbunden ist und deren Ausgang an eine Eingangsstufe (19) der Demodulatorschaltung (18) angelegt ist, und einer Steuerschaltung (12) zum Einstellen und/oder Testen der Demodulatorschaltung (18) vorgesehen, die die Testsignalgeneratorstufe (28) zur Durchführung eines Einstell- bzw. Testbetriebs steuert und die im Einstell- bzw. Testbetrieb in Abhängigkeit vom Ausgangssignal der Demodulatorschaltung (18) diese einstellt bzw. ein die Funktionsfähigkeit anzeigendes Testergebnissignal liefert.

## Beschreibung

Die Erfindung betrifft eine Empfängeranordnung zum Empfang frequenzmodulierter Funksignale sowie ein Verfahren zum Anpassen eines Empfangszweiges der Empfängeranordnung an eine Eingangsstufe einer Signalverarbeitungsschaltung und ein Selbsttestverfahren für den Empfangszweig.

Empfängeranordnungen zum Empfang frequenzmodulierter Funksignale weisen üblicherweise in ihrem Empfangszweig einen Eingangskreis auf, in dem die Trägerfrequenz des empfangenen und verstärkten Antennensignals auf eine von der empfangenen Trägerfrequenz unabhängige, feste Zwischenfrequenz herabgesetzt wird. Das Zwischenfrequenzsignal wird dann einer Demodulatorschaltung zugeführt, die einen Demodulatorkreis besitzt, der das Zwischenfrequenzsignal in ein Spannungssignal umsetzt. Der Demodulatorkreis benutzt dabei einen Schwingkreis, der auf die Zwischenfrequenz abgestimmt ist, um die Phasenverschiebung des frequenzmodulierten Zwischenfrequenzsignals zu erfassen und daraus ein entsprechendes Spannungssignal abzuleiten.

Weicht die Eigenfrequenz des Schwingkreises infolge von Fertigungstoleranzen, Temperatureinflüssen und/oder alterungsbedingt von der Zwischenfrequenz ab oder schwankt die Zwischenfrequenz infolge von Toleranzen, Temperaturdriften und Alterungserscheinungen eines Taktsignaloszillators, so wird die Ausgangsspannung des Demodulatorkreises um einen Gleichspannungsanteil verschoben. Da ein als Eingangsstufe einer nachfolgenden Verarbeitungsschaltung dienender A/D-Wandler nur einen begrenzten Dynamikbereich und damit nur einen begrenzten Eingangsspannungsbereich aufweist, ist eine entsprechende Kompensation des unerwünschten Gleichspannungsanteils im Ausgangssignals des Demodulatorkreises erforderlich. Hierzu wird eine Offset-Stufe verwendet, die durch Addition oder Subtraktion einer entsprechenden Gleichspannung zum bzw. vom Ausgangssignal des Demodulatorkreises den Gleichspannungsversatz infolge der Abweichung der Eigenfrequenz des Schwingkreises von der Zwischenfrequenz kompensiert.

Um die Offset-Stufe zur Anpassung des Ausgangssignals der Demodulatorschaltung an den Eingangsspannungsbereich der Eingangsstufe der nachfolgenden Signalverarbeitungsschaltung einzustellen, können bei einer für Burst-Empfang ausgelegten Empfängeranordnung die ersten Bits eines Bursts, die zur Synchronisation dienen, als Testsignale für einen Einstellbetrieb benutzt werden, ohne daß ein Datenverlust auftritt.

Weisen die einzelnen Bursts jedoch nur wenige Startbits auf, die den Anfang eines Bursts signalisieren, wie dies beim Bluetooth-Standard der Fall ist, so ist eine Anpassung der Demodulatorschaltung an die Signalverarbeitungsschaltung auf diese bekannte Weise nicht möglich.

Davon ausgehend liegt der Erfindung die Aufgabe zugrunde, eine Empfängeranordnung zum Empfang frequenzmodulierter Funksignale bereitzustellen, bei der die Anpassung einer Demodulatorschaltung an die Eingangsstufe einer nachfolgenden Signalverarbeitungsschaltung ohne externe Testsignale durchgeführt werden kann. Eine weitere Aufgabe der Erfindung ist es, Verfahren zum Anpassen eines Empfangszweiges einer Empfängeranordnung an eine Eingangsstufe der Signalverarbeitungsschaltung sowie ein Selbsttestverfahren für den Empfangszweig bereitzustellen.

Diese Aufgabe wird durch die Empfängeranordnung nach Anspruch 1 sowie durch die Verfahren nach Anspruch 10 bzw. 14 gelöst.

Erfindungsgemäß ist also bei einer Empfängeranordnung zum Empfang frequenzmodulierter Funksignale, die eine Demodulatorschaltung zum Umsetzen eines Zwischenfrequenzsignals in ein Spannungssignal, das an einer Eingangsstufe einer Signalverarbeitungsschaltung angelegt wird, und einen Taktsignaloszillator aufweist, der ein Taktsignal zur Taktung von Schaltungselementen liefert, eine Testsignalgeneratorstufe vorgesehen, deren Eingang mit einem das Taktsignal liefernden Ausgang des Taktsignaloszillator verbunden ist und deren Ausgang an einer Eingangsstufe der Demodulatorschaltung angelegt ist, wobei eine Steuerschaltung zum Einstellen und/oder Testen der Demodulatorschaltung die Testsignalgeneratorstufe zur Durchführung eines Einstell- bzw. Testbetriebs steuert und im Einstell- bzw. Testbetrieb in Abhängigkeit vom Ausgangssignal der Demodulatorschaltung diese einstellt bzw. ein die Funktionsfähigkeit anzeigendes Testergebnissignal liefert.

Insbesondere läßt sich also zum Anpassen eines die Demodulatorschaltung umfassenden Empfangszweiges an die Eingangsstufe der Signalverarbeitungsschaltung zunächst aus einem vom Taktsignaloszillator gelieferten Taktsignal ein Testsignal mit bekannter Frequenz bilden, das an einen Eingang der Demodulatorstufe angelegt wird, um anschließend die Demodulatorschaltung in Abhängigkeit von ihrem Ausgangssignal so einzustellen, daß ihr Ausgangssignal an die Eingangsstufe der Signalverarbeitungsschaltung angepaßt ist.

Daneben läßt sich zum Testen des Empfangszweiges der Empfängeranordnung auch ein Selbsttestverfahren durchführen, bei dem aus einem vom Taktsignalgenerator gelieferten Taktsignal ein Testsignal mit bekannter Frequenz gebildet wird, das an einen Eingang der Demodulatorschaltung angelegt wird, und bei dem in Abhängigkeit vom Ausgangssignal des Empfangszweiges ein dessen Funktionsfähigkeit anzeigendes Testergebnissignal erzeugt wird.

Die vorliegende Erfindung ermöglicht es also, ohne externe Signale die Funktionsfähigkeit einer Empfängeranordnung zu überprüfen und außerdem den Empfangszweig an die nachfolgende Signalverarbeitungsschaltung anzupassen, wobei ein Taktsignal eines ohnehin in der Empfängeranordnung vorhandenen Oszillators zur Erzeugung des Testsignals verwendet wird.

Besonders zweckmäßig ist es, wenn die Testsignalgeneratorstufe mit dem Taktsignaloszillator verbunden ist, dessen Taktsignal zur Erzeugung eines Frequenzsignals für die Herabsetzung der Frequenz eines Empfangssignals auf die Zwischenfrequenz dient, da hierbei das Testsignal vom selben Taktsignaloszillator hergeleitet wird, wie das Frequenzsignal für die Herabsetzung der Frequenz des Empfangssignals auf die Zwischenfrequenz, und somit Schwankungen des Taktsignals für das Einstellen der Demodulatorschaltung praktisch ohne Bedeutung sind, weil derartige Schwankungen auch entsprechende Toleranzen der Zwischenfrequenz bewirken.

Wenn die Frequenz des Taktsignaloszillators in einem geeigneten Verhältnis zur Zwischenfrequenz steht, ist es denkbar, als Testsignalgeneratorstufe einfach einen von der Steuerschaltung betätigbaren Schalter vorzusehen, über den das Taktsignal unmittelbar an den Eingang der Demodulatorschaltung angelegt wird. Bei einer vorteilhaften Ausgestaltung der Erfindung ist jedoch vorgesehen, daß die Testsignalgeneratorstufe einen Frequenzteiler umfaßt, der als Ausgangssignal ein Frequenzsignal liefert, das eine Harmonische mit einer ersten Frequenz gleich oder nahezu gleich der Zwischenfrequenz enthält. Das Frequenzsignal ist dabei ein nicht-sinusförmiges Signal, insbesondere ein Rechteckwellensignal.

Um die Genauigkeit der Einstellung der Demodulatorschaltung weiter zu verbessern, ist bei einer Weiterbildung der Erfindung vorgesehen, daß die Testsignalgeneratorstufe einen weiteren Frequenzteiler aufweist, dessen Frequenzteilerverhältnis von dem des ersten Frequenzteilers verschieden ist und dessen Ausgangssignal an einen Mischer angelegt ist, dem auch das Ausgangssignal des ersten Frequenzteilers zugeführt ist, um ein Testsignal zu erhalten, das eine andere Harmonische mit einer zweiten Frequenz nahe der Zwischenfrequenz enthält, wobei der Taktsignalausgang des Taktsignaloszillators über jeweils einen von der Steuerschaltung steuerbaren Schalter an die Frequenzteiler angelegt ist.

Besonders vorteilhaft ist es, wenn die Demodulatorschaltung als Eingangsstufe ein Bandpassfilter aufweist, und daß die Grundfrequenz des Testsignals größer als die Bandbreite des Bandpassfilters, vorzugsweise größer als das Doppelte der Bandbreite, insbesondere größer als das Vierfache der Bandbreite des Bandpassfilters ist.

Eine zweckmäßige Ausgestaltung der Erfindung zeichnet sich dadurch aus, daß die Demodulatorschaltung als Ausgangsstufe eine Offset-Stufe aufweist, die mit einem Spannungssignalausgang eines Demodulatorkreises der Demodulatorschaltung verbunden ist, um das Ausgangssignal der Demodulatorschaltung an die Eingangsstufe der Signalverarbeitungsschaltung anzupassen, wobei die Offset-Stufe dem vom Demodulatorkreis gelieferten Spannungssignal einen Gleichspannungsanteil hinzufügt.
Um den Einstellbetrieb möglichst einfach zu gestalten, ist vorgesehen, daß die Offset-Stufe von der Steuerschaltung während des Einstellbetriebs in Abhängigkeit von ihrem Ausgangssignal eingestellt wird.

Eine besonders bevorzugte Ausführungsform der Erfindung zeichnet sich dadurch aus, daß der Steuerschaltung ein Speicher zugeordnet ist, in dem ein während des Einstellbetriebs in Abhängigkeit vom Ausgangssignal der Offset-Stufe ermittelter Wert für einen einzustellenden Gleichspannungsversatz gespeichert ist, und daß die Offset-Stufe von der Steuerschaltung entsprechend dem gespeicherten Wert einstellbar ist. Hierdurch wird es ermöglicht, während einer Empfangsperiode die Einstellung der Demodulatorschaltung vor jedem Burst aufgrund eines zu Beginn der Empfangsperiode ermittelten Einstellwertes einzustellen. Hierbei läßt sich also die Ermittlung eines Einstellwertes für die Demodulatorschaltung vor jedem Burst vermeiden, was eine Reduzierung des Energieverbrauchs der Empfängeranordnung zur Folge hat, ohne die Empfangsqualität zu beeinträchtigen, da Frequenzdriften in der Demodulatorschaltung während einer Empfangsperiode praktisch nicht zu befürchten sind.

Bei der Durchführung des erfindungsgemäßen Verfahrens zum Anpassen des Empfangszweiges an die Eingangsstufe der Signalverarbeitungsschaltung ist zweckmäßigerweise vorgesehen, daß das Testsignal aus dem vom Taktsignaloszillator gelieferten Taktsignal durch Frequenzteilung mit Wellenformung, insbesondere mit Rechteckwellenformung gebildet wird, so daß das Testsignal eine Harmonische mit einer ersten Frequenz gleich oder nahezu gleich der Zwischenfrequenz enthält und die Harmonische mit der ersten Frequenz über ein Filter, vorzugsweise über ein Bandpassfilter, einem Demodulatorkreis der Demodulatorschaltung zugeführt wird.

Bei einer vorteilhaften Ausgestaltung des erfindungsgemäßen Verfahrens ist vorgesehen, daß ein zweites Testsignal durch Mischen des ersten Testsignals mit einem aus dem vom Taktsignaloszillator gelieferten Taktsignal durch Frequenzteilung mit anderem Teilerfaktor gebildeten Signal erzeugt wird, dessen Frequenz gleich oder nahezu gleich dem Doppelten der Differenz zwischen der Frequenz der Harmonischen mit der ersten Frequenz und der Zwischenfrequenz ist, so daß das zweite Testsignal eine Harmonische mit einer zweiten Frequenz nahezu gleich der Zwischenfrequenz enthält.

Dabei ist es besonders vorteilhaft, wenn das erste und das zweite Testsignal nacheinander an die Demodulatorschaltung angelegt werden, um einen Gleichspannungsversatz für die Anpassung des Ausgangssignals der Demodulatorschaltung an die Eingangsstufe der Signalverarbeitungsschaltung zu ermitteln.

Auch bei dem Selbsttestverfahren wird das Testsignal vorteilhafterweise aus dem vom Taktsignaloszillator gelieferten Taktsignal durch Frequenzteilung mit Rechteckwellenformung gebildet, so daß das Testsignal eine Harmonische mit der ersten Frequenz gleich oder nahezu gleich der Zwischenfrequenz enthält.

Die vorliegende Erfindung ermöglicht also die Verwendung eines relativ langsamen Taktsignals zum Testen und Einstellen einer Demodulatorschaltung, die mit einer relativ hohen Frequenz arbeitet, ohne daß aufwendige Schaltungsanordnungen zur Erzeugung einer hohen Frequenz aus einer niedrigen Taktfrequenz eingesetzt werden müssen, indem einfach eine in einem Rechteckwellensignal vorliegende Harmonische dieses Signals aus dem Rechteckwellensignal herausgefiltert und als eigentliches Testsignal verwendet wird.

Durch Kombination des ersten Rechteckwellensignals mit einem zweiten Signal, dessen Frequenz durch Frequenzteilung mit einem wesentlich höheren Teilungsfaktor aus dem Taktsignal abgeleitet wurde, läßt sich ein zweites Testsignal erzeugen, so daß für die Einstellung zwei Messungen durchgeführt werden können, aus denen dann ein genauerer Einstellwert ermittelt werden kann.

Die Erfindung wird im folgenden beispielsweise anhand der Zeichnung näher erläutert. Es zeigen:
**Figur 1** ein vereinfachtes schematisches Blockschaltbild einer erfindungsgemäßen Empfängeranordnung zum Empfang frequenzmodulierter Funksignale;

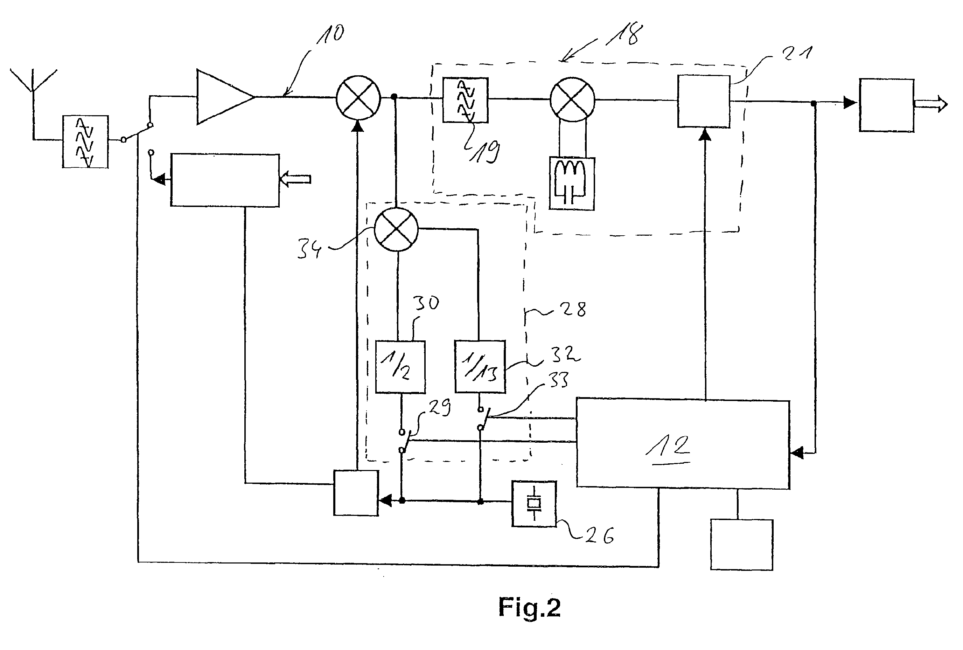

**Figur 2** ein vereinfachtes schematisches Blockschaltbild einer weiteren erfindungsgemäßen Empfängeranordnung;
**Figur 3a** ein Frequenz-Zeit-Diagramm zur Veranschaulichung des Zwischenfrequenzsignals;
**Figur 3b** ein Spannungs-Zeit-Diagramm zur Veranschaulichung des aus dem Zwischenfrequenzsignal von der Demodulatorschaltung erzeugten Spannungssignals; und
**Figuren 3c und 3d** Diagramme zur Erläuterung des Verfahrens zum Anpassen der Demodulatorschaltung an die Eingangsstufe der Signalverarbeitungsschaltung.

In den verschiedenen Figuren der Zeichnung sind einander entsprechende Schaltungselemente mit gleichen Bezugszeichen versehen.

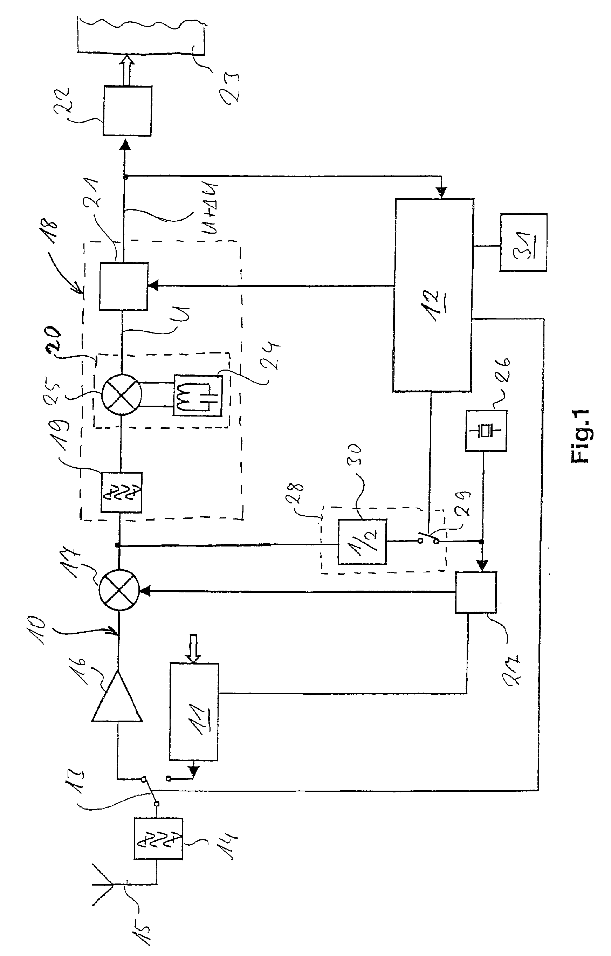

Figur 1 zeigt eine Sender-Empfänger-Anordnung mit einem Empfangszweig 10 und einem Sendezweig 11, deren Eingang bzw. Ausgang über einen von einer Steuerschaltung 12 gesteuerten Umschalter 13 mit einem Anschluß eines Antennenfilters 14 verbunden ist, an dessen anderem Anschluß eine Sende-Empfangs-Antenne 15 angeschlossen ist.

Der Empfangszweig 10 umfaßt einen Eingangsverstärker 16, der das hochfrequente Antennensignal verstärkt und einem Eingang eines Mischers 17 zuführt, an dessen anderen Eingang ein Frequenzsignal angelegt ist, dessen Frequenz so auf die Frequenz des Antennensignals abgestimmt ist, daß ein Zwischenfrequenzsignal erzeugt wird, dessen Frequenz die Zwischenfrequenz ist.

Das vom Mischer 17 gelieferte Zwischenfrequenzsignal wird an ein als Eingangsstufe einer Demodulatorschaltung 18 dienendes Bandpassfilter 19 angelegt, dessen Ausgang mit einem Demodulatorkreis 20 verbunden ist, der das Zwischenfrequenzsignal in ein Spannungssignal umsetzt, das über eine als Ausgangsstufe der Demodulatorschaltung 18 dienende Offset-Stufe 21 an einen A/D-Wandler 22 angelegt ist, der als Eingangsstufe einer Signalverarbeitungsschaltung 23 dient.

Der Demodulatorkreis 20 umfaßt einen Schwingkreis 24, der beispielsweise als paralleler LC-Schwingkreis ausgelegt ist, und einen damit verbundenen FM-Diskriminator 25, an den das Zwischenfrequenzsignal vom Bandpassfilter 19 angelegt ist.

Zur Erzeugung des Frequenzsignals für die Herabsetzung der Frequenz des hochfrequenten Empfangs- oder Antennensignals auf die Zwischenfrequenz ist ein Taktsignaloszillator 26 vorgesehen, dessen Taktsignal an eine Hochfrequenzsignalerzeugungsschaltung 27 angelegt ist. Das von der Hochfrequenzsignalerzeugungsschaltung 27 erzeugte Frequenzsignal ist dann an den Mischer 17 und an den Sendezweig 11 je nach der Betriebsart der Sender-Empfänger-Anordnung anlegbar.

Im normalen Empfangsbetrieb wird die Frequenz des Empfangs- oder Antennensignals, beispielsweise 2,4 GHz, nach entsprechender Verstärkung des Signals im Eingangsverstärker 16 im Mischer 17 auf die Zwischenfrequenz von 111 MHz herabgesetzt, wozu das Frequenzsignal von der Hochfrequenzsignalerzeugungsschaltung 27 eine Frequenz von 2,289 GHz aufweist. Das vom Mischer 17 gelieferte Zwischenfrequenzsignal wird über das Bandpassfilter 19, dessen zentrale Frequenz der Zwischenfrequenz entspricht und das eine relativ schmale Bandbreite von weniger als 6 MHz, vorzugsweise von weniger als 3 MHz und insbesondere eine Bandbreite von 1,1 MHz aufweist. Das vom Bandpassfilter 19 durchgelassene Zwischenfrequenzsignal, das infolge der Frequenzmodulation die Frequenzen 110,8 MHz und 111,2 MHz enthält, wird in dem FM-Diskriminator 25 so mit der vom Schwingkreis 24 gelieferten Zwischenfrequenz in Bezug gesetzt, daß der Demodulatorkreis 20 eine erste Spannung U₋ liefert, die kleiner als eine mittlere Spannung U₀ ist, wenn die Frequenz des Zwischenfrequenzsignals 110,8 MHz beträgt, und eine zweite U₊ liefert, die größer als die mittlere Spannung U₀ ist, wenn die Frequenz des Zwischenfrequenzsignals 111,2 MHz ist. Die Spannung U₀ ist die mittlere Spannung, die dann vom Demodulatorkreis 20 ausgegeben wird, wenn die am Eingang des Demodulatorkreises 20 anliegende Frequenz gleich der vom Schwingkreis 24 gelieferten Frequenz ist.

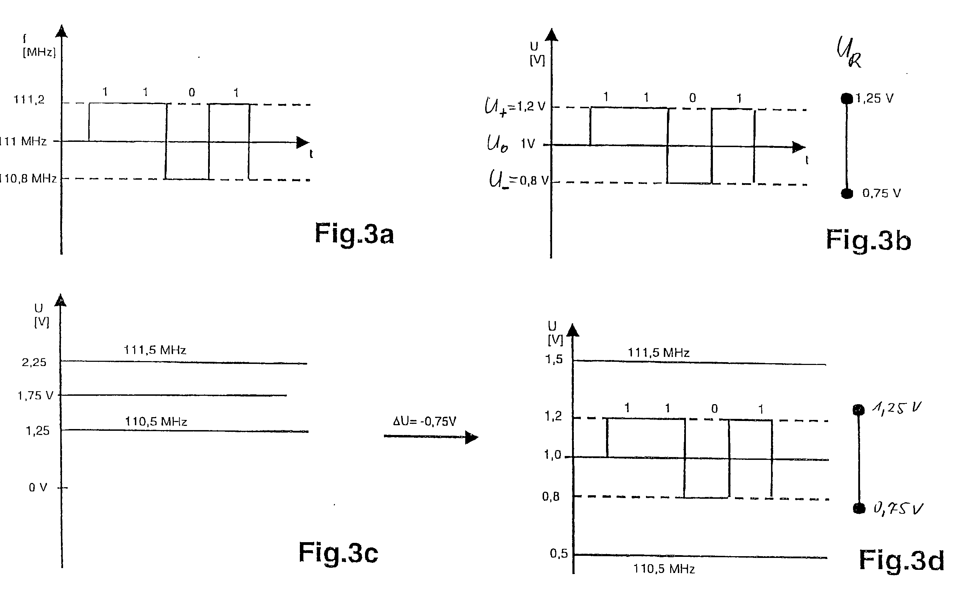

Wie in Figur 3b dargestellt ist, liefert beispielsweise der Demodulatorkreis 20 bei idealem Schwingkreis 24 eine Spannung U₊ = 1,2 V für eine Eingangsfrequenz 111,2 MHz und eine Spannung U₋ = 0,8 V für eine Eingangsfrequenz von 110,8 MHz. Diese Spannungen sind an den Eingangsspannungsbereich U_{R} des A/D-Wandlers 22 angepaßt, der im dargestellten Ausführungsbeispiel zwischen 0,75 V und 1,25 V liegt.

Weicht die Frequenz des Schwingkreises 24 infolge von Temperatureinflüssen und/oder alterungsbedingt von der Zwischenfrequenz 111 MHz ab und beträgt beispielsweise 110,25 MHz, so wird die Ausgangsspannung U₊ für die höhere Eingangsfrequenz 1,95 V, während die Ausgangsspannung U₋ des Demodulatorkreises 20 für die kleinere Eingangsfrequenz 1,55 V beträgt. Damit liegen die vom Demodulatorkreis 20 gelieferten Spannungen außerhalb des Eingangsspannungsbereichs U_{R} des A/D-Wandlers 22, so daß die Offset-Schaltung 21 so eingestellt werden muß, daß deren Ausgangsspannung (U + ΔU) 1,2 V oder 0,8 V beträgt. Im dargestellten Zahlenbeispiel beträgt ΔU also -0,75 V.

Um die von der Offset-Stufe 21 zur Ausgangsspannung des Demodulatorkreises hinzuzufügende Gleichspannung, also um die Offset-Spannung ΔU bestimmen zu können, weist die erfindungsgemäße Empfängeranordnung der Sender-Empfänger-Anordnung in Figur 1 eine Testsignalgeneratorstufe 28 auf, die einen von der Steuerschaltung 12 steuerbaren Schalter 29 und einen Frequenzteiler 30 umfaßt. Über den Schalter 29 kann das Taktsignal vom Taktsignaloszillator 26 an den Frequenzteiler 30 angelegt werden, der im dargestellten Ausführungsbeispiel den Teilerfaktor 1/2 aufweist, und der ein Rechteckwellensignal liefert, das an den Eingang des Bandpassfilters 19 angelegt ist.

Wird angenommen, daß die Frequenz des Taktsignals 13 MHz beträgt, so beträgt die Frequenz des Testsignals 6,5 MHz. Da das Testsignal ein Rechteckwellensignal ist, enthält es auch die harmonischen Oberwellen. Im vorliegenden Beispiel ist die Frequenz der 17. Harmonischen des Rechteckwellensignals mit der Frequenz 6,5 MHz 110,5 MHz und liegt somit nahe bei der Zwischenfrequenz von 111 MHz. Da das Rechteckwellensignal von der Testsignalgeneratorstufe 28 über das schmalbandige Bandpassfilter 19 an den Demodulatorkreis 20 angelegt ist, gelangt nur die 17. Harmonische zum Demodulatorkreis 20. Die Frequenz der Harmonischen, deren Frequenz gleich oder nahezu gleich der Zwischenfrequenz ist, darfsich von der Zwischenfrequenz nur um einen solchen Betrag unterscheiden, daß sie vom Bandpassfilter 19 durchgelassen wird. Umgekehrt muß das Bandpassfilter 19 so schmalbandig sein, daß es die der ausgewählten Harmonischen benachbarten Harmonischen nicht passieren läßt. Zweckmäßigerweise ist also die Bandbreite des Bandpassfilters 19, sofern sie nicht durch andere Spezifikationen ohnehin kleiner zu wählen ist, zumindest kleiner als die Frequenz des Testsignals, vorzugweise kleiner als die halbe Frequenz des Testsignals, insbesondere kleiner als ein Viertel der Testsignalfrequenz zu wählen.

Zum Einstellen der Offset-Spannung ΔU wird also von der Steuerschaltung 12 der Schalter 29 geschlossen, so daß ein Rechteckwellensignal mit der halben Frequenz der Taktsignalfrequenz an das als Eingangsstufe der Demodulatorschaltung 18 dienende Bandpassfilter 19 angelegt wird. Die im dargestellten Zahlenbeispiel 17. Harmonische des Testsignals, die eine Frequenz von 110,5 MHz besitzt, wird an den Demodulatorkreis 20 angelegt, der ein Ausgangssignal U = 1,25 V liefert, wie in Figur 3c dargestellt ist, da angenommen wird, daß die Frequenz des Schwingkreises 24 110,25 MHz beträgt. Da zunächst zum Einstellen der Demodulatorschaltung die Offset-Spannung ΔU, die von der Offset-Stufe 21 dem Ausgangssignal U des Demodulatorkreises 20 aufgeprägt wird, gleich Null ist, kann aus der Ausgangsspannung der Offset-Stufe 21, die der Steuerschaltung 12 zugeführt ist, und der erwarteten Ausgangsspannung, nämlich U = 0,5 V die Offset-Spannung ΔU = -0,75 V berechnet werden. Im einfachsten Fall wird die Offset-Stufe 21 auf ΔU = -0,75 V eingestellt und in der Steuerschaltung 12 überprüft, ob nun die Ausgangsspannung U + ΔU der Demodulatorschaltung 18 dem erwarteten Wert entspricht. Ist dies der Fall, so wird der Einstellvorgang beendet.

Um den Einstellwert während eines Zeitraums, in dem keine Temperaturdriften oder Alterungseinflüsse des Schwingkreises 24 zu erwarten sind, erneut benutzen zu können, ist der Steuerschaltung 12 ein Speicher 31 zugeordnet, in dem der Wert für die Offset-Spannung gespeichert wird.

Arbeitet die Empfängeranordnung als Element eines Telekommunikationssystems im Burst-Betrieb, so kann vor dem Eintreffen jedes Bursts die Einstellung der Demodulatorschaltung 18 in der beschriebenen Weise durchgeführt werden. Zweckmäßigerweise wird jedoch während einer Empfangsperiode die Einstellung der Demodulatorschaltung 18 nur vor dem ersten Burst in der beschriebenen Weise vorgenommen, während anschließend die jeweilige erneute Einstellung mit Hilfe des im Speicher 31 gespeicherten Werts für die Offset-Spannung ΔU erfolgt, da während einer relativ kurzen Empfangsperiode Änderungen der Schwingkreisfrequenz infolge von Temperaturschwankungen oder Alterungserscheinungen praktisch nicht vorkommen.

Bei einer vorteilhaften Weiterbildung der Erfindung weist die Testsignalgeneratorstufe neben dem ersten 1/2-Frequenzteiler 30 einen zweiten 1/13-Frequenzteiler 32 auf, der über einen Schalter 33 mit dem Taktsignalausgang des Taktsignaloszillators 26 verbindbar ist. Die Ausgangssignale der beiden Frequenzteiler werden in einem Mischer 34 miteinander kombiniert, so daß das Testsignal ausgehend von einer Taktsignaloszillatorfrequenz von 13 MHz neben der 7,5 MHz Rechteckwellenkomponente eine Signalkomponente mit 111,5 MHz enthält, die sich durch Kombination der 17. Harmonischen des Ausgangssignals des 1/2-Frequenzteilers 30 mit dem 1 MHz Ausgangssignal des 1/13-Frequenzteilers 32 ergibt. Aus dem an den Eingang der Demodulatorschaltung 18 angelegten Frequenzgemisch wird als eigentliches Testsignal vom Bandpassfilter 19 nur die Signalkomponente mit 111,5 MHz durchgelassen, die zu einer Ausgangsspannung U = 2,25 V des Demodulatorkreises 20 führt, wenn die gleichen Frequenzen vorausgesetzt werden, wie bei dem anhand von Figur 1 beschriebenen Ausführungsbeispiel. Da anstelle der Ausgangsspannung U = 2,25 V für eine Frequenz von 111,5 MHz eine Ausgangsspannung von 1,5 V erwartet wird, läßt sich auch aus der so ermittelten Ausgangsfrequenz die Offset-Spannung ΔU = -0,75 V bestimmen, wie in Figur 3c dargestellt ist. Vorzugsweise ist jedoch vorgesehen, daß beim Einstellen der Demodulatorschaltung 18 von der Steuerschaltung 12 zunächst nur Schalter 29 geschlossen wird, so daß ein Meßbetrieb durchgeführt wird, wie oben beschrieben wurde.

Nachdem also für die erste Testsignalfrequenz von 110,5 MHz die Ausgangsspannung 1,25 V ermittelt wurde, wird anschließend der Schalter 33 von der Steuerschaltung 12 geschlossen, um den zweiten Meßvorgang durchzuführen, der, wie bereits erläutert, für die Testfrequenz 115 MHz die Ausgangsspannung 2,25 V liefert. Durch Mittelwertbildung kann dann die Spannung 1,75 V bestimmt werden, die der Zwischenfrequenz 111 MHz entspricht. Da dieser Mittelwert wiederum um +0,75 V von der erwarteten Ausgangsspannung 1 V für die Zwischenfrequenz abweicht, läßt sich auch hieraus die Offset-Spannung ΔU = -0,75 V bestimmen. Durch Einstellen der Offset-Spannung der Offset-Stufe 21 wird die Ausgangsspannung der Demodulatorschaltung 18 an den Eingangsspannungsbereich des A/D-Wandlers 22 angepaßt, wie in Figur 3d gezeigt.

Auf diese Weise läßt sich die Genauigkeit der Ermittlung der benötigten Offset-Spannung erhöhen, so daß eine bessere und genauere Einstellung der Demodulatorschaltung 18 erreicht wird.

Die erfindungsgemäße Schaltung eignet sich auch für die Durchführung eines Selbsttestverfahrens, bei dem der Empfangszweig 10 bzw. der an den Mischer 17 zur Herabsetzung der Eingangsfrequenz auf die Zwischenfrequenz anschließende Teil des Empfangszweiges geprüft werden kann. Hierzu wird wie beim Einstellen der Demodulatorschaltung 18 aus dem vom Taktsignaloszillator 26 gelieferten Taktsignal ein Rechteckwellensignal gebildet, das eine Harmonische mit einer Frequenz nahe der Zwischenfrequenz aufweist. Dieses Testsignal wird in der oben beschriebenen Weise an die Demodulatorschaltung 18 angelegt und bewirkt ein Ausgangssignal, das der Steuerschaltung 12 zugeführt wird, die aufgrund des Ausgangssignals ein die Funktionsfähigkeit anzeigendes Testergebnissignal liefert, das über eine entsprechende Anzeigevorrichtung der Sender-Empfänger-Anordnung ausgegeben werden kann.

Zum Selbsttest ist es aber auch möglich, daß nach dem Feststellen der Funktionsfähigkeit der Demodulatorschaltung 18 die Offset-Schaltung 21 so eingestellt wird, daß das Ausgangssignal der Demodulatorschaltung 18, das vom Testsignal bewirkt wird, in den Eingangsspannungsbereich der Eingangsstufe der Signalverarbeitungsschaltung fällt, so daß auch der A/D-Wandler und weitere Schaltungselemente in der Signalverarbeitungsstufe auf ihre Funktionsfähigkeit hin überprüft werden können. In diesem Fall wird das die Funktionsfähigkeit anzeigende Testergebnissignal in der Signalverarbeitungsschaltung erzeugt.

## Patentansprüche

1. Empfängeranordnung zum Empfang frequenzmodulierter Funksignale, mit
- einer Demodulatorschaltung (18), die ein Zwischenfrequenzsignal in ein Spannungssignal umsetzt, das an eine Eingangsstufe (22) einer Signalverarbeitungsschaltung (23) angelegt wird,
- einem Taktsignaloszillator (26), der ein Taktsignal zur Taktung von Schaltungselementen liefert,
- einer Testsignalgeneratorstufe (28), deren Eingang mit einem das Taktsignal liefernden Ausgang des Taktsignaloszillators (26) verbunden ist und deren Ausgang an eine Eingangsstufe (19) der Demodulatorschaltung (18) angelegt ist, und
- einer Steuerschaltung (12) zum Einstellen und/oder Testen der Demodulatorschaltung (18), die die Testsignalgeneratorstufe (28) zur Durchführung eines Einstell- bzw. Testbetriebs steuert und die im Einstell- bzw. Testbetrieb in Abhängigkeit vom Ausgangssignal der Demodulatorschaltung (18) diese einstellt bzw. ein die Funktionsfähigkeit anzeigendes Testergebnissignal liefert.

2. Empfängeranordnung nach Anspruch 1, **dadurch gekennzeichnet, daß** die Testsignalgeneratorstufe (28) mit dem Taktsignaloszillator (26) verbunden ist, dessen Taktsignal zur Erzeugung eines Frequenzsignals für die Herabsetzung der Frequenz eines Empfangssignals auf die Zwischenfrequenz dient.

3. Empfängeranordnung nach Anspruch 1 oder 2, **dadurch gekennzeichnet, daß** die Testsignalgeneratorstufe (28) einen Frequenzteiler (30) umfaßt, der als Ausgangssignal ein Frequenzsignal liefert, das eine Harmonische mit einer ersten Frequenz gleich oder nahezu gleich der Zwischenfrequenz enthält.

4. Empfängeranordnung nach Anspruch 3, **dadurch gekennzeichnet, daß** die Testsignalgeneratorstufe (28) einen weiteren Frequenzteiler (32) aufweist, dessen Frequenzteilerverhältnis von dem des ersten Frequenzteilers (30) verschieden ist und dessen Ausgangssignal an einen Mischer (34) angelegt ist, dem auch das Ausgangssignal des ersten Frequenzteilers (30) zugeführt ist, um ein Testsignal zu erhalten, das eine andere Harmonische mit einer zweiten Frequenz nahe der Zwischenfrequenz enthält.

5. Empfängeranordnung nach Anspruch 3 oder 4, **dadurch gekennzeichnet, daß** der Taktsignalausgang des Taktsignaloszillators (26) über jeweils einen von der Steuerschaltung steuerbaren Schalter (29, 33) an die Frequenzteiler (30, 32) angelegt ist.

6. Empfängeranordnung nach einem der vorstehenden Ansprüche, **dadurch gekennzeichnet, daß** die Demodulatorschaltung (18) als Eingangsstufe ein Bandpassfilter (19) aufweist, und daß die Grundfrequenz des Testsignals größer als die Bandbreite des Bandpassfilters (19), vorzugsweise größer als das Doppelte der Bandbreite, insbesondere größer als das Vierfache der Bandbreite des Bandpassfilters (19) ist.

7. Empfängeranordnung nach einem der vorstehenden Ansprüche, **dadurch gekennzeichnet, daß** die Demodulatorschaltung (18) als Ausgangsstufe eine Offset-Stufe (21) aufweist, die mit einem Spannungssignalausgang eines Demodulatorkreises (20) der Demodulatorschaltung (18) verbunden ist, um das Ausgangssignal der Demodulatorschaltung (18) an die Eingangsstufe (22) der Signalverarbeitungsschaltung (23) anzupassen.

8. Empfängeranordnung nach Anspruch 7, **dadurch gekennzeichnet, daß** die Offset-Stufe (21) dem vom Demodulatorkreis (20) gelieferten Spannungssignal einen Gleichspannungsanteil hinzufügt.

9. Empfängeranordnung nach Anspruch 7 oder 8, **dadurch gekennzeichnet, daß** die Offset-Stufe (21) von der Steuerschaltung (12) während des Einstellbetriebs in Abhängigkeit von ihrem Ausgangssignal eingestellt wird.

10. Empfängeranordnung nach Anspruch 7 oder 8, **dadurch gekennzeichnet, daß** der Steuerschaltung (12) ein Speicher (31) zugeordnet ist, in dem ein während des Einstellbetriebs in Abhängigkeit vom Ausgangssignal der Offset-Stufe (21) ermittelter Wert für einen einzustellenden Gleichspannungsversatz gespeichert ist, und daß die Offset-Stufe (21) von der Steuerschaltung (12) entsprechend dem gespeicherten Wert einstellbar ist.

11. Verfahren zum Anpassen eines Empfangszweiges einer Empfängeranordnung, der eine ein Zwischenfrequenzsignal in ein Spannungssignal umsetzende Demodulatorschaltung (18) umfaßt, an eine Eingangsstufe (22) einer Signalverarbeitungsschaltung (23), bei dem
- aus einem vom Taktsignaloszillator (26) gelieferten Taktsignal ein Testsignal mit bekannter Frequenz gebildet wird, das an einen Eingang der Demodulatorschaltung (18) angelegt wird, und
- die Demodulatorschaltung (18) in Abhängigkeit von ihrem Ausgangssignal eingestellt wird, um ihr Ausgangssignal an die Eingangsstufe (22) der Signalverarbeitungsschaltung (23) anzupassen.

12. Verfahren nach Anspruch 11, **dadurch gekennzeichnet, daß**
- das Testsignal aus dem vom Taktsignaloszillator (26) gelieferten Taktsignal durch Frequenzteilung mit Wellenformung gebildet wird, so daß das Testsignal eine Harmonische mit einer ersten Frequenz gleich oder nahezu gleich der Zwischenfrequenz enthält, und
- die Harmonische mit der ersten Frequenz über ein Filter, vorzugsweise über ein Bandpassfilter (19), einem Demodulatorkreis (20) der Demodulatorschaltung (18) zugeführt wird.

13. Verfahren nach Anspruch 12, **dadurch gekennzeichnet, daß** ein zweites Testsignal durch Mischen des ersten Testsignals mit einem aus dem vom Taktsignaloszillator (26) gelieferten Taktsignal durch Frequenzteilung mit anderem Teilerfaktor gebildeten Signal erzeugt wird, dessen Frequenz gleich oder nahezu gleich dem Doppelten der Differenz zwischen der Frequenz der Harmonischen mit der ersten Frequenz und der Zwischenfrequenz ist, so daß das zweite Testsignal eine Harmonische mit einer zweiten Frequenz nahezu gleich der Zwischenfrequenz enthält.

14. Verfahren nach Anspruch 13, **dadurch gekennzeichnet, daß** das erste und das zweite Testsignal nacheinander an die Demodulatorschaltung (18) angelegt werden, um einen Gleichspannungsversatz für die Anpassung des Ausgangssignals der Demodulatorschaltung (18) an die Eingangsstufe (22) der Signalverarbeitungsschaltung (23) zu ermitteln.

15. Selbsttestverfahren zum Testen eines Empfangszweiges einer Empfängeranordnung mit Taktsignalgenerator, der eine ein Zwischenfrequenzsignal umsetzende Demodulatorschaltung (18) aufweist, bei dem
- aus einem vom Taktsignaloszillator (26) gelieferten Taktsignal ein Testsignal mit bekannter Frequenz gebildet wird, das an einen Eingang der Demodulatorschaltung (18) angelegt wird, und
- in Abhängigkeit vom Ausgangssignal des Empfangszweiges (10) ein dessen Funktionsfähigkeit anzeigendes Testergebnissignal erzeugt wird.

16. Verfahren nach Anspruch 15, **dadurch gekennzeichnet, daß**
- das Testsignal aus dem vom Taktsignaloszillator (26) gelieferten Taktsignal durch Frequenzteilung mit Rechteckwellenformung gebildet wird, so daß Testsignal eine Harmonische mit einer ersten Frequenz gleich oder nahezu gleich der Zwischenfrequenz enthält.
